# EUROPEAN PATENT SPECIFICATION

(11) **EP 1 888 448 B1**
(45) Date of publication and mention of the grant of the patent: **02.02.2011**
(21) Application number: 06756315.5
(22) Date of filing: 07.06.2006
(51) Int. Cl.: B66F 7/02, B66F 3/08, B66F 7/14

(54) **SAFETY DEVICE FOR VERTICAL, OBLIQUE OR HORIZONTAL MOVEMENTS.**
SICHERHEITSVORRICHTUNG FÜR VERTIKALE, SCHRÄGE ODER HORIZONTALE BEWEGUNGEN.
DISPOSITIF DE SÉCURITÉ POUR DES MOUVEMENTS VERTICAUX, OBLIQUES OU HORIZONTAUX.

(30) Priority: 10.06.2005 IT FI20050127; 10.06.2005 IT FI20050128
(43) Date of publication of application: 20.02.2008
(73) Proprietor: Bimeccanica S.R.L., 50051 Castelfiorentino (IT)
(72) Inventor: BRACHELENTE, Natale, I-50041 Castelfiorentino (IT)
(74) Representative: Nesti, Antonio
(86) International application number: PCT/IT2006/000424
(87) International publication number: WO 2006/131949

(56) References cited:
- EP-A- 0 995 714
- DE-U1- 29 506 066
- FR-A1- 2 832 202
- US-A- 1 407 160
- US-A- 1 408 891
- US-A- 2 187 390
- US-A- 2 654 264
- US-A- 2 758 485
- US-A- 3 309 060
- US-A- 3 857 547
- PATENT ABSTRACTS OF JAPAN vol. 004, no. 130 (E-025), 12 September 1980 (1980-09-12) -& JP 55 085012 A (TOSHIBA CORP), 26 June 1980 (1980-06-26)

## Description

The invention relates to a mechanism to ensure safety in installations for vertical or very inclined movements with respect to the horizontal, which comprise a threaded bar and at least one cooperating nut, i.e. comprising at least one lifting nut associated with a base support to be moved by means of rotation of the threaded bar. Such installations are known.

US 2,758,485 A (to Jahnel) discloses a device for safe mounting for vertical, oblique and horizontal movements of a resisting structure with base support, by means of a threaded bar and nuts cooperating therewith; whereby a moving nut is surrounded by wedge or abutment members which are internally tapered, and said wedge or abutment members are received in a tubular member.

The main object of the invention is to obtain control of wear of the thread of the lifting nut and to produce an alarm and/or a shut down of operation, and/or a support for the load being moved by an installation of the aforesaid type.

Said object is achieved by a device according to claim 1.

An other embodiment comprises:
- in said base support, a seat through which the threaded bar passes;
- in said seat a safety nut screwed onto said threaded bar and capable of sliding with respect to said seat;
- a front interlocking coupling between said lifting nut and said safety nut, capable of allowing release of said two base and safety nuts when wear of the thread of the lifting nut exceeds a maximum safety limit; and
- an axial stop member between said safety nut and said base support, which acts to support the base support and therefore the resisting structure associated therewith.

Means - such as a thrust bearing - are provided to allow rotation of the safety nut with respect to said stop, when the load rests on the safety nut mechanically interrupting movement of the load.

An electrical warning system or the like can be provided to act before the safety nut has reached said stop member.

Optionally, a system suitable to allow appraisal of the position of said safety nut with respect to the base support, and also of the degree of wear progressively reached by the lifting nut, can be provided.

The interlocking coupling between the two nuts comprises profiles with cooperating teeth until sliding between the two lifting and safety nuts is exceeded, due to maximum wear of the thread of the lifting nut.

Other characteristics of the invention are defined in the claims

appended at the foot of the present description.

The invention will be better understood by following the description and accompanying drawing, which shows a practical non-limiting example of said invention. In the drawing:

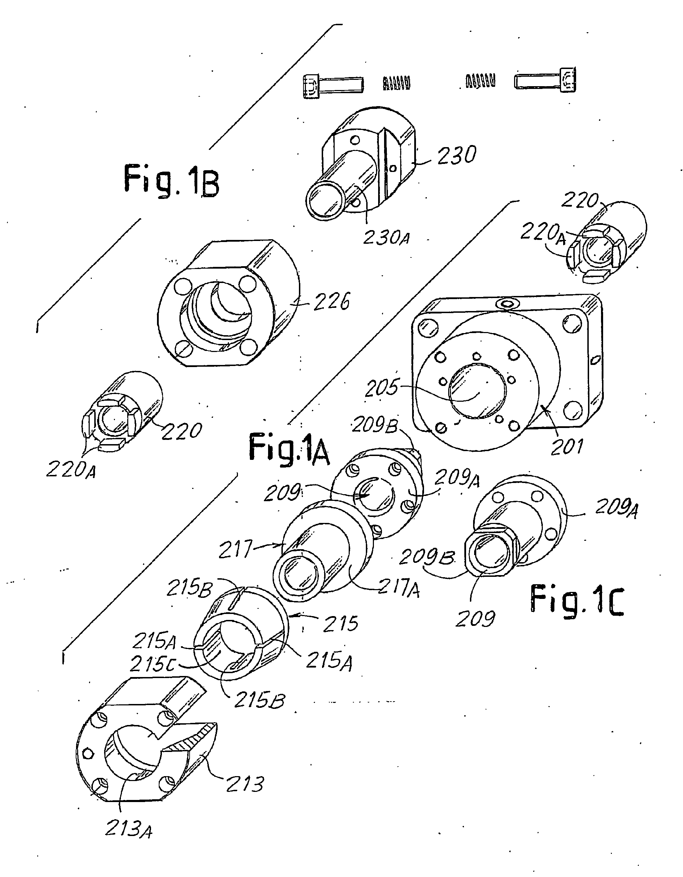

Figures 1A, 1B and 1C show some components of the mechanism in exploded perspective views;
Figures 2 and 3 show sectional views of the mechanism in question, in two variants of installation and in different scales;
Figure 4 shows a detail of the section shown in Figures 2 and 3 with the components in conditions with no wear of the lifting nut;
Figure 5 shows an enlarged local section according to V-V in Figure 2;
Figures 6 and 7 show the same detail as Figure 4; with the components in conditions of partial wear and of maximum wear of the lifting nut.

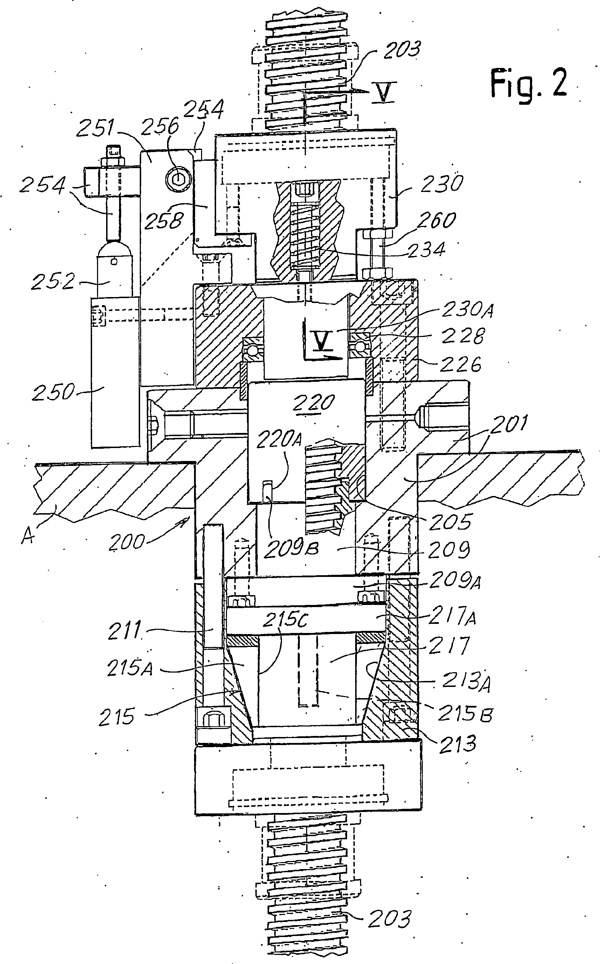

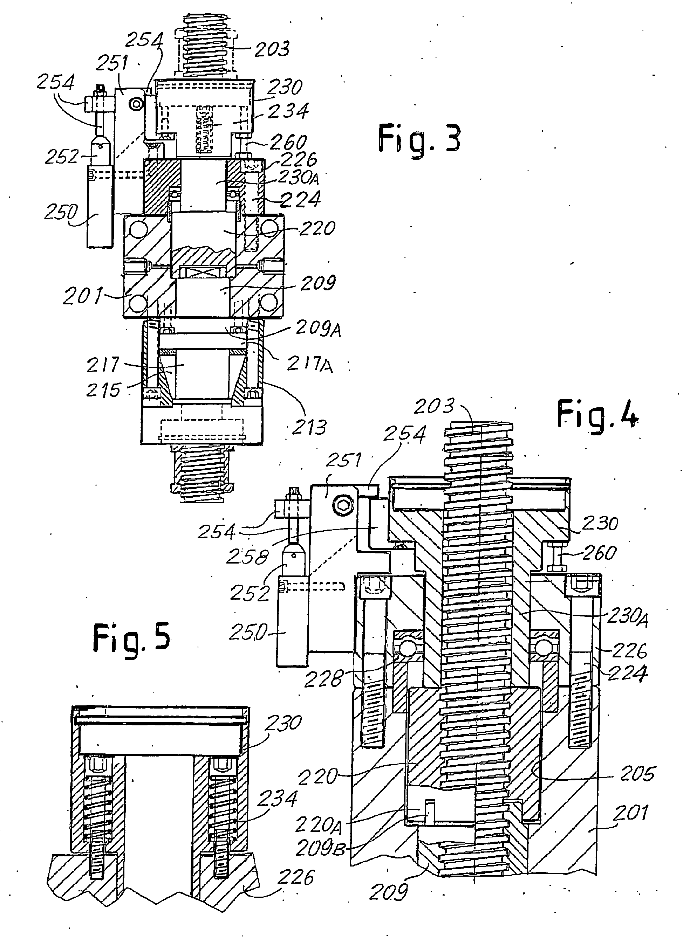

According to the illustrations in the accompanying drawing, the numerals 200 in Figure 2 and 201 in Figure 3 indicate a base support to be connected to the structure to be moved vertically or almost vertically by means of rotation of a vertical or inclined threaded bar 203; the support 200 can be attached to a horizontal component A as shown in Figure 2, while the support 201 can be attached to a vertical wall as shown in the subsequent Figures.

The base support - like the one 201 - through which the threaded bar 203 passes, forms a housing for a lifting nut 209, engaged by the thread of the threaded bar 203 to allow movement of the assembly. A locking ring nut 213 can be attached to the base support 201 by means of screws 211; this ring nut 213 has a truncated cone shaped seat 213A, which when attached to the base support 201 is opened towards the flange 209A of the lifting nut 209. A sleeved collet 215, externally tapered to mate with the surface of the truncated cone shaped seat 213A of the locking ring nut 213 is received inside the seat 213A of the locking ring nut 213; this tapered collet 215 forms a cylindrical seat 215C for a second supplementary flanged lifting nut 217; during assembly the nut 217 is screwed onto the threaded bar 203 to come into contact with the flange 209a of the main lifting nut 209.

The tapered collet 215 has a double series of longitudinal slots 215A and 215B, which originate respectively from the two ends of the tapered collet and are distributed alternately to each other around said collet. With this arrangement the tapered collet 215, when received in the housing 213A of the locking ring nut 213, can be deformed to reduce the dimensions of the diameter of the cylindrical seat 215C thereof, to lock the supplementary flanged lifting nut 217 when the tapered locking ring nut 213 is forced towards the base support 201 by the screws 211, by means of the ring nut 213.

With this arrangement a double presence of flanged lifting nuts, the main one 209 and the supplementary one 217 respectively, is obtained.

The supplementary nut 217 is screwed onto the threaded bar 203 until the flange 217A thereof is abutting with the flange 209A of the main threaded nut 209; after this, by locking the tapered locking ring nut 213 with the screws 211, the supplementary threaded nut 217 is locked rotatingly against the rotation, so that the two nuts 209 and 217 functionally operate in a pair to support the load resting on the base support 201, and therefore on the resisting structure to be moved by lifting and lowering through rotation of the threaded bar 203. The slots 215A and 215B ensure efficient locking by the tapered collet 215, which substantially maintains its geometry during locking performed by the tapered locking ring nut 213. All this allows cooperation to be easily ensured between two lifting nuts which must operate in combination dividing the load into a larger quantity of engaged threads.

The upper end of the threaded lifting nut 209 is provided with a series of front teeth 209B projecting inside a cylindrical seat 205 produced in the base support 201. Received in said seat 205 is a safety nut 220, cylindrical and therefore capable of sliding axially with respect to the axis of the threaded bar 203 and of the cylindrical seat 205; this safety nut 220 - which is threaded so that it too can mate with the threaded bar 203 - inferiorly has teeth 220A capable of mating with the teeth 209B of the lifting nut 209, with the possibility of reciprocal sliding as the teeth of the two sets of teeth 209B and 220A have a substantially parallel profile; moreover, when the safety nut 220 slides upward in the seat 205 with respect to the base support 201, beyond a certain limit of upward sliding it is released from the teeth 209B, for the purposes indicated hereunder.

Provided above the base support 200 or 201 and mated therewith by means of screws 224 is a sleeve 226; produced in said sleeve 226 is a seat, opening downward for a thrust bearing 228, against which the upper edge of the safety nut 220 can rest when pushed upward with respect to the seat 205 in which it is received. Extending inside the thrust bearing 228 is the extension 230A of a safety sleeve 230, which can also slide in combination with the safety nut 220, with respect to which said extension 230A is narrower. Suitable compression springs 234, embedded in the sleeve 230, guarantee adhesion between the sleeve 230 and the safety nut 220. From the above it is therefore clear that the safety nut 220 and the safety sleeve 230 move simultaneously with respect to the assembly of the base support 201 and of the sleeve 226 with bearing 228, to obtain the desired objects. These objects are, on the whole, to obtain a safety warning or actually shut down operation of the threaded bar 203 and of the nut 209, when the safety conditions of the assembly cease to exist due to the wear to which the lifting nuts are subjected during operation thereof, when reaching a limit of wear beyond which safety ceases to exist and the lifting nuts must be replaced. Optionally, it is possible also to obtain a continuous visual check and the possibility of measuring the progressive wear of these nuts until reaching the maximum limit warning, as indicated hereunder.

A safety switch 250 is attached to the base support 201 or to the sleeve 226 fastened thereto by means of a connection element 251. This switch 250 has a head 252 forming a control sensor of said switch 250, said sensor being capable of being controlled to reach a warning position by a feeler 254 with adjustment screw. This feeler 254 is connected in 256 to the support 251 and has an appendix capable of being operated by a bracket 258 fastened to the safety sleeve 230 and therefore movable like the safety nut 220.

With this device - as will be more apparent hereunder - the safety switch 250 activates a warning signal that indicates the maximum safety level of wear, beyond which the lifting nuts must be replaced; in these conditions, the switch 250, optionally provided with a timer, can even cause shut down of the rotation control of the threaded bar 203.

The device in question can also optionally offer a systematic visual check during operation thereof, to appraise visually or with a thickness gauge instrument or the like, the progressive level of wear of the threads of the lifting nuts like those 209 and 217. This visual check can be implemented through a screw 260 on the safety sleeve 230, the head of which is facing the upper surface of the sleeve 226 which moves together with the safety nut 220. Therefore, movement of the nut 220 in its seat 205 can be appraised by assessing the distance between the head of the screw 260 and said upper surface of the sleeve 226.

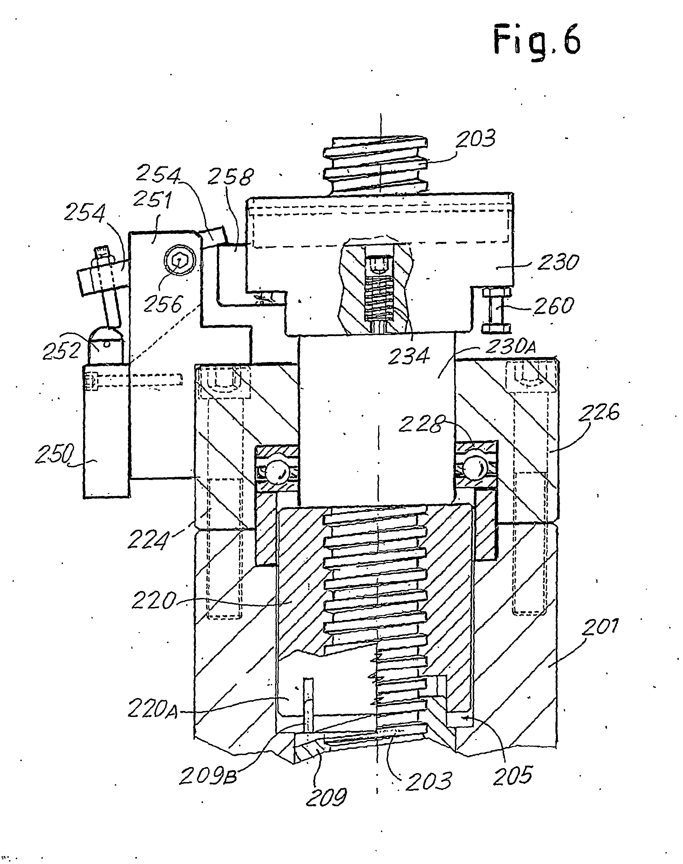

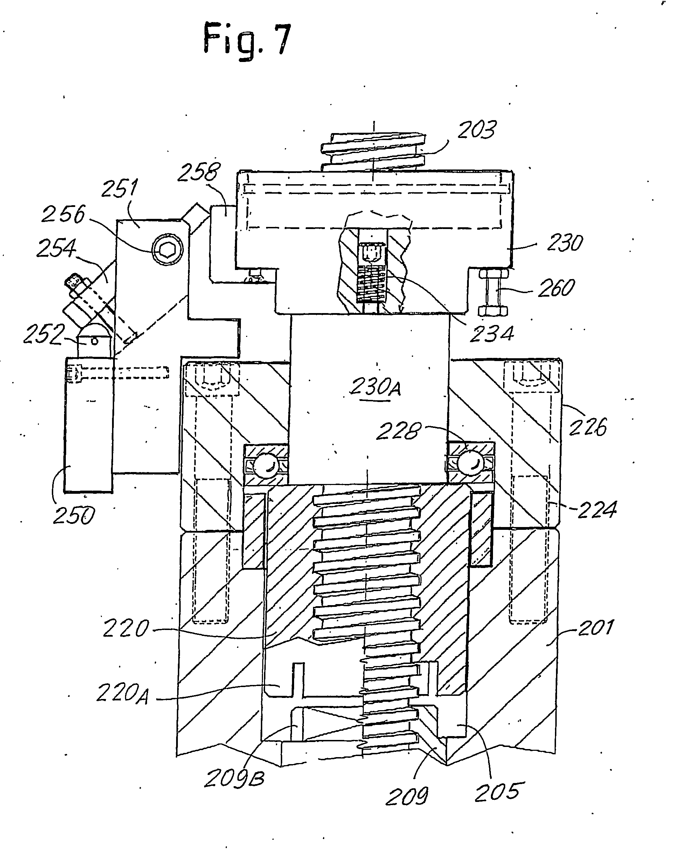

During operation of the device, with progressive wear of the two lifting nuts 209 and 217, these tend to lower together with the base support 201, with respect to the safety nut 220, which cannot rotate as it is engaged, with its teeth 220A, with the front teeth 209B of the nut 209. Lifting of the nut 220 with respect to the assembly of the nuts 209 and 217 is thereby obtained, as can be seen by comparing Figures 4, 6 and 7 to reach the position in Figure 7, in which the teeth 220A of the nut 220 disengage from the teeth 209B of the nut 209 and rest on the bearing 228. In these conditions the safety nut 220 prevents the assembly 201, 226 or 200, 226 from dropping even in the event of total destruction of the threads of the nuts 209 and 217, as the safety nut 220, being stressed by the thrust of the load through the bearing 228, rotates with the threaded bar 203 mechanically interrupting movement; any danger of the structure dropping is thus prevented, even if the bar 203 continues to rotate, through being permitted to do so by the bearing 228.

During relative lifting of the nut 220 with respect to the assembly 201, 226 (or 200, 226) and therefore with progressive lifting of the safety sleeve 230 with respect to said assembly, on the one hand control of the switch 250 for advance warning and optional shut down of rotation of the threaded bar are obtained, while on the other hand progressive wear of the thread of the two lifting nuts can be controlled visually or using a calibrated thickness gauge or the like, through the variation in the distance of the head of the screw 260 from the sleeve 226. Initial calibration during installation of the device, both as regards the switch 250 and as regards visual check with the screw 260, is obtained by adjusting the feeler 254 and respectively the position of the screw 260, both which must be locked after adjustment by means of the lock nut.

It is understood that the drawing only shows an example provided by way of a practical arrangement of the invention, which may vary in forms and arrangement without however departing from the scope as defined in the claims. Any reference numerals in the appended claims are provided to facilitate reading thereof with reference to the description and to the drawing, and do not limit the scope of protection represented by the claims.

## Claims

1. Device for safe mounting for vertical, oblique and horizontal movements of a resisting structure with base support, by means of a threaded bar and nut or nuts cooperating therewith, **characterized in that** a moving nut (217) to be fixed to the base support (200, 201) is surrounded by a sleeved collet (215) external tapered with partial longitudinal slots (215A, 215B) originating alternately from the two opposite ends of said tapered sleeved collet, and **in that** said tapered sleeved collet (215) is received and locked in a truncated cone shaped seat (213A) of a locking ring nut (213) engaged with the base support (200, 201 or other) of the resisting structure.

2. Device as claimed in claim 1, **characterized in that** it comprises at least two opposed nuts (209, 217) screwed onto the bar (203), a first (209) of said lifting or translating nuts being received by and fastened to the base support (200, 201) of the resisting structure to be moved, while the other nut (217) is locked by screw means (211) or similar, which force the locking ring nut (213) towards and against the base support.

3. Device as claimed in claim 2, **characterized in that** the two or more nuts (209, 217) are screwed against each other.

4. Device as claimed in at least one of claims 1 to 3, **characterized in that** the two nuts (209, 217) are flanged and **in that** the flange (209A) of the lifting or translating nut (209) is used for fastening to the base support, while the tapered sleeved collet (215) acts on the flange (217A) of the supplementary nut (217).

5. Device as claimed in at least one of the previous claims, **characterized in that** it comprises adjustment, guiding and thickness gauging members, associated with the components of the previous claims.

## Patentansprüche

1. Vorrichtung für den sicheren Einbau einer senkrechten, geneigten und horizontalen Bewegungen widerstehenden Struktur auf einer Unterlage mittels einer Gewindestange und einer dazu mitwirkenden Mutter oder Muttern, **dadurch gekennzeichnet dass** eine bewegliche, an der Unterlage (200, 201) zu befestigende Mutter von einem äußerlich verjüngten hülsenförmigen Ring (215) mit teilweise längsgerichteten, abwechselnd von den zwei entgegengesetzten Enden des genannten verjüngten Ringes ausgehenden Schlitzen (215A, 215B) umgeben ist, und dass der genannte hülsenförmige Ring (215) in einem kegelstupfförmigen Sitz (213A) einer selbstsperrenden Ringmutter (213) aufgenommen und gesperrt wird, die in der Unterlage (200, 201 oder dergleichen) der widerstehenden Struktur eingreift.

2. Vorrichtung nach Anspruch 1, **dadurch gekennzeichnet dass** sie mindestens zwei entgegengesetzte, auf der Stange aufgeschraubte Muttern (209, 217) umfasst, wobei die eine (209) der genannten hebenden oder gleitenden Muttern in der Unterlage (200, 201) der widerstehenden und fortzubewegenden Struktur aufgenommen und befestigt wird, während die andere Mutter (217) durch schraubenförmige oder ähnliche Mittel gesperrt wird, die die selbstsperrende Ringmutter (213) zur Unterlage hindrängen und dieser aufdrängen.

3. Vorrichtung nach Anspruch 2, **dadurch gekennzeichnet dass** die zwei oder mehreren Muttern (209, 217) gegeneinander geschraubt sind.

4. Vorrichtung nach mindestens einem der Ansprüche von 1 bis 3, **dadurch gekennzeichnet dass** die zwei Muttern (209, 217) mit einem Flansch versehen sind und dass der Flansch (209A) der hebenden oder gleitenden Mutter (209) für die Befestigung an der Unterlage verwendet wird, während der verjüngte hülsenförmige Ring (215) auf den Flansch (217A) der zusätzlichen Mutter (217) einwirkt.

5. Vorrichtung nach mindestens einem der vorhergehenden Ansprüche, **dadurch gekennzeichnet, dass** sie einstellende, führende und stärkemessende Elemente umfasst, die mit den Elementen der vorhergehenden Ansprüche verbunden sind.

## Revendications

1. Dispositif pour le montage sûr pour des mouvements verticaux, obliques et horizontaux d'une structure résistante avec support de base, au moyen d'une barre filetée et d'un écrou ou des écrous coopérant avec celle-ci, **caractérisée en ce qu'**un écrou mobile (217) destiné à être fixé au support de base (200, 201) est entouré par une bague à gaine (215) extérieurement conique avec des fentes longitudinales partielles (215A, 215B) s'étendant alternativement à partir des deux extrémités opposées de ladite bague à gaine conique, et **en ce que** ladite bague à gaine conique (215) est logée et bloquée dans un siège à profil tronconique (213A) d'un écrou annulaire de blocage (213) engagé avec le support de base (200, 201 ou autre) de la structure résistante.

2. Dispositif selon la revendication 1, **caractérisé en ce qu'**il comprend au moins deux écrous opposés (209, 217) vissés sur la barre (203), un premier (209) desdits écrous de soulèvement ou de translation étant reçus par et fixés au support de base (200, 201) de la structure résistante à déplacer, alors que l'autre écrou (217) est bloqué par des moyens à vis (211) ou similaires, lesquels forcent l'écrou annulaire de blocage (213) vers et contre le support de base.

3. Dispositif selon la revendication 2, **caractérisé en ce que** les au moins deux écrous (209, 217) sont vissés l'un contre l'autre.

4. Dispositif selon au moins l'une des revendications 1 à 3, **caractérisé en ce que** les deux écrous (209, 217) sont des écrous à embase et **en ce que** l'embase (209A) de l'écrou de soulèvement ou de translation (209) est utilisé pour la fixation au support de base, alors que la bague à gaine conique (215) agit sur l'embase (217A) de l'écrou supplémentaire (217).

5. Dispositif selon au moins une des revendications précédentes, **caractérisé en ce qu'**il comprend des éléments de réglage, guidage et mesure d'épaisseur, associés aux composants des revendications précédentes.
